# EUROPEAN PATENT SPECIFICATION

(11) **EP 0 831 573 B1**
(45) Date of publication and mention of the grant of the patent: **15.12.2004**
(21) Application number: 97307211.9
(22) Date of filing: 17.09.1997
(51) Int. Cl.: H02K 5/16, H02K 23/40, H02K 23/04

(54) **Electric motor**
Elektromotor
Moteur électrique

(30) Priority: 24.09.1996 GB 9620007
(43) Date of publication of application: 25.03.1998
(73) Proprietor: Johnson Electric S.A., 2300 La Chaux-de-Fonds (CH)
(72) Inventor: Lau, James Ching Sik, North Point, Hong Kong (CN)
(74) Representative: Higgins, Michael Roger

(56) References cited:
- EP-A- 0 564 258
- FR-A- 2 675 645
- US-A- 4 335 323
- US-A- 4 896 065
- PATENT ABSTRACTS OF JAPAN vol. 014, no. 528 (E-1004), 20 November 1990 & JP 02 223346 A (MATSUSHITA ELECTRIC WORKS LTD), 5 September 1990

## Description

### Field of the Invention

This invention relates to electric motors and in particular to an arrangement for concentrating the magnetic field of a miniature permanent magnet d.c. motor.

### Background of the Invention

It has been found that by biasing the rotor of a motor to one side so that the shaft always makes contact with its bearing at the same position on the bearing surface, the motor will run quieter due to a reduction in bearing rattle. This biasing of the rotor may be by mechanical means as shown in DE 2835507, by shaping the bearing or by magnetically biasing the rotor as shown in US 2,439,193 and US 4,079,274.

From US-A-4896065, it is known to have a round miniature motor that has a cylindrical motor case with a bearing on the closed end face, a stator consisting of one or more permanent magnets, brushes and terminals, and a rotor supported by the bearing and having core windings and a commutator. The or each permanent magnet is adapted so that the magnetic field intensity between the rotor and the stator is unbalanced. The rotor is thereby biased in one direction in the bearing to reduce vibration.

FR-A-2675645 discloses a round electric motor having a cylindrical casing, a stator and a rotor. The stator includes two arcuate permanent magnets mounted opposite each other. A rotatable split flux ring is provided on the outside of the cylindrical casing. The position of the flux ring can be changed to alter the magnetic flux and thereby adjust the rotational behaviour of the motor.

From FR-A-2675645, it can be seen that the magnetic field of a PMDC motor having a magnetically conductive casing housing the permanent magnets of the stator and requiring a flux ring can be modified or influenced by the shape and/or positioning of the flux ring. A flux ring is a magnetically conductive ring or strip of material used to provide a flux return path between the magnets of the stator and is used when the casing does not provide an adequate flux path, i.e., the return path provided by the casing is saturated.

Normally, flux rings are fitted to the outside of the casing and substantially surround the stator magnets to provide an alternative or additional flux return path to that provided by the casing. The flux ring is usually split with the split being aligned with the centreline of one of the magnets, thus providing a symmetrical flux return path.

### Summary of the Invention

In the present invention, the flux ring is shorter so that there is a substantial gap between the opposing ends of the flux ring and the ring is aligned so that the gap is located between the magnets. In this way, the magnetic flux return path is asymmetrical resulting in a shift in the magnetic field of the stator towards the gap between the magnets which is bridged by the flux ring.

Accordingly, the present invention provides a flat-sided miniature permanent magnet d.c. motor comprising a two pole permanent magnet stator, a casing having flat sides and housing the stator, a wound armature including a commutator mounted on a shaft rotatably mounted in confrontation with the stator, an end cap closing an open end of the casing and supporting a bearing in which the shaft is journalled and carrying brush gear and motor terminals for connecting the wound armature to a source of electrical power, and a flux ring fitted to the casing providing a significant flux return path for the stator in conjunction with the casing characterised in that the flux ring has a shape corresponding to the shape of the casing and is magnetically asymmetric with respect to a first plane containing the longitudinal axis of the motor and bisecting the poles of the stator.

While the permanent magnet stator may comprise a rubber ring magnet, it is preferable if it has two ceramic arcuate segment magnets.

A preferred embodiment of the present invention will now be described, by way of example only, with reference to the accompanying drawings.

### Brief Description of the Drawings

In the drawings:
Figure 1 is a side view showing a preferred embodiment of a motor according to the present invention;
Figure 2 is an end view of the rotor of Figure 1 and
Figure 3 is a similar view to Figure 2 but with an end plate and rotor removed.

### Description of the Preferred Embodiment

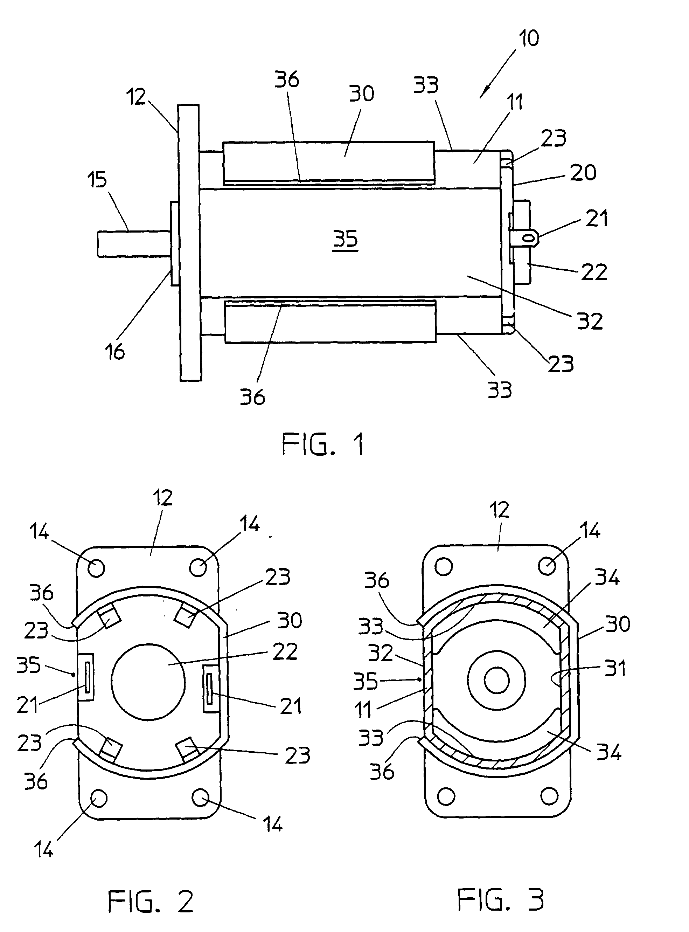

The motor 10 shown in Figure 1 is a permanent magnet d.c. motor. The motor 10 has a casing 11, a drive end end plate 12 and a non-drive end end plate 20. The drive end end plate 12 is also known as flange 12 as it extends radially significantly past the edge of the casing 11 and has holes 14 for mounting the motor. A shaft 15 is shown extending through flange 12. The shaft forms the output of the motor and carries a wound armature (not shown) including a commutator as is common with PMDC motors. The shaft 15 is journalled in bearings supported by the end plates 12, 20. Flange 12 has a boss 16 in which a shaft bearing is housed. Flange 12 is of known structure.

End plate 20 also known as end cap 20 carries motor terminals 21 and brush gear (not shown) for electrically connecting armature windings via the commutator to the motor terminals. A boss 22 accommodates the other shaft bearing. As more easily seen in Figure 2, end cap 20 has four peripheral recesses 23. The end cap is securely attached to the casing 12 by portions of the casing which are pressed into the recesses 23 in the end cap. End cap 20 is of known structure.

Casing 11 is a ferromagnetic material as is typically used. The casing is cylindrical with two flat sides 31, 32 joined by two arcuate sides 33 producing what is colloquially termed a flat sided motor. The flat sides are more apparent in Figure 3. The casing houses two permanent magnets 34. The magnets are arcuate and sized to fit against the two arcuate sides leaving a substantially circular cylindrical space for the armature. The casing 11 may be a rolled ring or a continuous ring or can formed by deep drawing.

In use, the casing 11 forms the flux return path of the magnets 34. However, due to the power of the magnets and the size or wall thickness of the casing, this flux path is saturated. Normally in such situations, the flux path provided by the casing is augmented by a flux ring which is typically a rolled ring of ferromagnetic sheet material or other magnetically conductive material which is placed around the casing in the region of the magnets to provide a low resistance flux path for the return flux of the stator.

In the present invention, a flux ring 30 is also used to augment the flux return path of the casing 11. The flux ring 30 is a rolled ring and has a substantial gap 35 between opposing longitudinal edges 36 of the ring. The gap 35 is aligned with one of the flat sides 32 in contrast with prior art flux rings in which the gap is aligned with one of the magnets. Preferably and as shown in Figure 3, the flux ring 30 covers one flat side 31 and the two arcuate sides 33 but ends at the junctions of the second flat side 32 with the two arcuate sides 33 so that the flux path provided by the second flat side 32 is substantially unaffected by the flux ring 30 and the flux return path on this side of the stator is predominantly through the second flat side 32 of the casing 11 which is magnetically saturated and through the air which has high magnetic resistance.

In this way, it is thought that the magnetic field of the stator on the side of the motor with the flux ring is stronger due to a lower resistance flux return path than the other side, resulting in a shifting of the centre of the magnetic field produced by the stator towards the side of the motor with the flux ring 30. This offset in the magnetic field may be in addition to other magnetic offsets created during the construction of the motor and helps to produce a quieter motor by reducing bearing rattle as previously described.

## Claims

1. A flat-sided miniature permanent magnet d.c. motor comprising
a two pole permanent magnet stator,
a casing (11)having flat sides and housing the stator,
a wound armature including a commutator mounted on a shaft rotatably mounted in confrontation with the stator,
an end cap (20) closing an open end of the casing (11) and supporting a bearing in which the shaft (15) is journalled and carrying brush gear and motor terminals (21) for connecting the wound armature to a source of electrical power, and
a flux ring (30) fitted to the casing (11) providing a significant flux return path for the stator in conjunction with the casing **characterised in that**
the flux ring (30) has a shape corresponding to the shape of the casing and is magnetically asymmetric with respect to a first plane containing the longitudinal axis of the motor and bisecting the poles of the stator.

2. A motor according to claim 1 **characterised in that** the flux ring (30) forms a predominant portion of the flux return path.

3. A motor as defined in claim 1 or claim 2 **characterised in that** the flux path provided by the casing is magnetically saturated.

4. A motor as defined in any one of the preceding claims **characterised in that** the flux ring (30) is fitted to the external surface of the casing.

5. A motor as defined in any one of the preceding claims **characterised in that** the casing (11) is cylindrical with two flat sides (31, 32) joined by two arcuate (33) sides and the stator comprises two arcuate permanent magnets (34) fitted to the two arcuate sides (33) wherein the flux ring (30) extends substantially about the two arcuate sides (33) and one flat side (31) only.

6. A motor as defined in any preceding claim **characterised in that** the two pole permanent magnet stator comprises two arcuate ceramic magnets (34) fitted to the arcuate sides (33) of the casing (11).

7. A motor as defined in any preceding claim **characterised in that** the flux ring (11) has a longitudinal split forming two radial edges (36), the two radial edges (36) are separated by a substantial gap (35) with the gap aligned with a second plane extending perpendicularly to the first plane and along the longitudinal axis of the motor.

## Patentansprüche

1. Dauermagnet-Gleichstrommotor in Miniaturbauweise und mit flachen Seiten, umfassend:
einen Zweipol-Dauermagnetstator,
ein Gehäuse (11), das flache Seiten aufweist und den Stator aufnimmt,
einen gewickelten Anker, der einen an einer Welle angebrachten Kommutator umfasst und gegenüber liegend zum Stator drehbar eingebaut ist,
eine Abschlusskappe (20), die ein offenes Ende des Gehäuses (11) schließt und ein Lager abstützt, in dem die Welle (15) durch den Wellenzapfen gelagert ist, und ein Bürstengestell und Motoranschlüsse (21) für die Verbindung des gewickelten Ankers mit einer elektrischen Energiequelle trägt, und
einen am Gehäuse (11) angebrachten Flussring (30), der zusammen mit dem Gehäuse einen wesentlichen Flussrückschluss für den Stator bereitstellt, **dadurch gekennzeichnet, dass**
der Flussring (30) eine Form aufweist, die der Form des Gehäuses entspricht und in Bezug auf eine erste Ebene, die die Längsachse des Motors enthält und die Pole des Stators halbiert, magnetisch asymmetrisch ist.

2. Motor nach Anspruch 1, **dadurch gekennzeichnet, dass** der Flussring (30) einen Hauptabschnitt des Flussrückschlusses bildet.

3. Motor nach Anspruch 1 oder Anspruch 2, **dadurch gekennzeichnet, dass** der durch das Gehäuse bereitgestellte Flussrückschluss magnetisch gesättigt ist.

4. Motor nach einem der vorhergehenden Ansprüche, **dadurch gekennzeichnet, dass** der Flussring (30) an der Außenfläche des Gehäuses angebracht ist.

5. Motor nach einem der vorhergehenden Ansprüche, **dadurch gekennzeichnet, dass** das Gehäuse (11) zylindrisch ist und zwei flache Seiten (31, 32) aufweist, die durch zwei gekrümmte Seiten (33) verbunden sind und der Stator zwei gekrümmte Dauermagnete (34) umfasst, die an den zwei gekrümmten Seiten (33) angebracht sind, wobei der Flussring (30) sich im Wesentlichen um die zwei gekrümmten Seiten (33) und nur eine flache Seite (31) erstreckt.

6. Motor nach einem der vorhergehenden Ansprüche, **dadurch gekennzeichnet, dass** der Zweipol-Dauermagnetstator zwei gekrümmte Keramikmagnete (34) umfasst, die an den gekrümmten Seiten (33) des Gehäuses (11) angebracht sind.

7. Motor nach einem der vorhergehenden Ansprüche, **dadurch gekennzeichnet, dass** der Flussring (11) einen Längsspalt aufweist, so dass zwei Radialkanten (36) gebildet werden, wobei die zwei Radialkanten (36) durch einen beträchtlichen Luftspalt (35) getrennt sind und der Luftspalt zu einer zweiten Ebene ausgerichtet ist, die sich senkrecht zur ersten Ebene und längs der Längsachse des Motors erstreckt.

## Revendications

1. Moteur électrique miniature c.c. à aimant permanent à côtés plats comprenant:
un stator à aimant permanent bipolaire,
un carter (11) comportant des côtés plats et logeant le stator,
un induit bobiné comprenant un collecteur monté sur un arbre monté mobile en rotation en confrontation avec le stator,
un obturateur d'extrémité (20) fermant une extrémité ouverte du carter (11) et supportant un palier dans lequel l'arbre (15) est monté par tourillon et supportant l'ensemble balais et les bornes de moteur (21) pour relier l'induit bobiné à une source d'énergie électrique, et
une bague de flux (30) installée sur le carter (11) et constituant un chemin de retour de flux significatif pour le stator conjointement au carter, **caractérisé en ce que**
la bague de flux (30) présente une forme correspondant à la forme du carter et est magnétiquement asymétrique par rapport à un premier plan contenant l'axe longitudinal du moteur et séparant en deux parties égales les pôles du stator.

2. Moteur selon la revendication 1, **caractérisé en ce que** la bague de flux (30) forme une partie prédominante du chemin de retour de flux.

3. Moteur selon la revendication 1 ou la revendication 2, **caractérisé en ce que** le chemin de flux constitué par le carter est magnétiquement saturé.

4. Moteur selon l'une quelconque des revendications précédentes, **caractérisé en ce que** la bague de flux (30) est installée sur la surface externe du carter.

5. Moteur selon l'une quelconque des revendications précédentes, **caractérisé en ce que** le carter (11) est cylindrique avec deux côtés plats (31, 32) joints par deux côtés (33) arqués, et le stator comprend deux aimants permanents arqués (34) installés sur les deux cotés arqués (33), dans lequel la bague de flux (30) s'étend sensiblement autour des deux cotés arqués (33) et seulement un côté plat (31).

6. Moteur selon l'une quelconque des revendications précédentes, **caractérisé en ce que** le stator à aimant permanent bipolaire comprend deux aimants arqués en céramique (34) installés sur les cotés arqués (33) du carter (11).

7. Moteur selon l'une quelconque des revendications précédentes, **caractérisé en ce que** la bague de flux (30) possède une fente longitudinale formant deux bords radiaux (36), les deux bords radiaux (36) sont séparés par un entrefer significatif (35), l'entrefer étant aligné avec un deuxième plan s'étendant perpendiculairement au premier plan et le long de l'axe longitudinal du moteur.
